(19) Europäisches Patentamt
European Patent Office
Office européen des brevets

(11) Publication number: **0 000 961**
**B1**

(12) # EUROPEAN PATENT SPECIFICATION

(45) Date of publication of patent specification: **06.10.82**

(51) Int. Cl.³: **G 03 C 5/17**, C 09 K 11/02, C 09 K 11/46, C 09 K 11/24, C 01 F 17/00

(21) Application number: **78200054.1**

(22) Date of filing: **20.06.78**

(54) **Phosphor-containing compositions and their use in X-ray photography.**

(30) Priority: **31.08.77 BE 2056201**

(43) Date of publication of application:
**07.03.79 Bulletin 79/5**

(45) Publication of the grant of the patent:
**06.10.82 Bulletin 82/40**

(84) Designated Contracting States:
**BE DE GB**

(56) References cited:
**DE - A - 2 304 150**
**DE - B - 1 271 542**
**FR - A - 2 344 618**
**US - A - 3 649 329**

(73) Proprietor: **AGFA-GEVAERT naamloze vennootschap**
**Septestraat 27**
**B-2510 Mortsel (BE)**

(72) Inventor: **Suys, André Roger**
**Lege Veldkantlaan 7**
**B-2540 Hove (BE)**
Inventor: **Van Landeghem, Willy Karel**
**Laarstraat 2**
**B-2780 Sint-Gillis-Waas (BE)**

**EP 0 000 961 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Phosphor-containing compositions and their use in X-ray photography

The present invention relates to phosphor-containing compositions of matter and more particularly to improved radiation conversion screens comprising halide containing phosphors.

A first class of radiation conversion screens are X-ray intensifying screens containing fluorescent substances which are employed for absorbing X-rays and converting said rays into light to which silver halide of a photographic material is more sensitive than to direct X-ray exposure. These screens also called radiographic intensifying screens are customarily arranged inside a cassette. When a silver halide film, carrying a silver halide emulsion layer on both sides of its support is placed in the cassette and the cassette is closed each emulsion layer is in intimate contact with an adjacent screen. In exposing the film the X-rays pass through one side of the cassette, through one entire intensifying (front) screen, through the light-sensitive silver halide film, which carries on both sides of the support a silver halide emulsion layer, and strike the fluorescent substances (phosphor particles) of the second (rear) intensifying screen. This causes both screens to fluoresce and to emit fluorescent light into at least the adjacent silver halide emulsion layer, which is inherently sensitive or spectrally sensitized to the light emitted by the screens.

A second class of radiation conversion screens are the so-called "fluoroscopic screens". Such screens have the function of producing a directly viewable image in correspondence with a pattern of penetrating radiation.

A third class of radiation conversion screens are fluorescent screens used in conjunction with a photocathode that emits photoelectrons under the influence of the fluorescent light of the screen. Such screens find application e.g. in image intensifier or image conversion tubes. In said tubes normally also a fluorescent screen is present which transforms the impact of fast moving electrons in light.

The commonly used X-ray intensifying screens comprise a support and a layer of fluorescent particles dispersed in a coherent film-forming macromolecular binder medium. Normally a protective coating is applied on top of the fluorescent layer to shield said layer from ambient influences e.g. moisture, air and mechanical abrasion.

The protection from moisture is required not only to prevent the fluorescent layer from staining but also to prevent water from being adsorbed by the phosphor particles. Unlike calcium tungstate a broad class of halide containing phosphors is more or less hygroscopic and even small amounts of water reduce the fluorescent light-emitting power of the phosphor after a certain time so that the intensifying screen becomes useless.

The U.S. Patent Specification 3,164,719 relates to luminescent screens having a protective coating of vinyl fluoride polymers and copolymers and contains a reference to the use in the prior art of cellulose derivatives and of synthetic polymers according to U.S. Patent Specification 2,907,882.

Layers comprising cellulosic derivatives are somewhat permeable to moisture and therefore the more hydrophobic but also more costly synthetic polymers containing fluorine atoms are applied to shield the phosphor layer from moisture.

The protective layers of said U.S. Patent Specification 3,164,719 do not always have the desired mechanical strength and adherence to the phosphor layer and often require a relatively high temperature (60—80°C) for lamination of phosphor and protective layer because of poor solubility of the polymers.

According to U.S. Patent Specification 3,836,784 it has been tried to protect phosphor particles against moisture by dispersing them into a hydrophobic polyfluorinated polymer binder containing 50—80 percent by weight of phosphor.

According to French Patent Specification 2,344,618 (=DE—OS 2,710,497) halide-containing phosphors are stabilized against moisture by adding organic substances, especially organometallic compounds and metal salts of carboxylic acids to a composition containing these phosphors.

In the published European Patent Application 0 000 792 an X-ray image intensifying screen is described wherein rare-earth oxyhalide phosphors used in admixture with non-hygroscopic halide-free phosphor particles are protected against moisture by compounds being capable of reacting with hydrogen chloride and/or with labile halogen e.g. the organic substances described in said FR 2,344,618.

In the published European Patent Application 0 000 961 filed on even date with said European Patent Application 0 000 792 X-ray image intensifying screens containing rare-earth oxyhalide phosphors are described wherein said phosphors are protected against moisture by adding amines e.g. laurylamine.

It is an object of the present invention to provide a composition of matter, which incorporates rare earth metal halide-containing phosphor particles with a rare earth metal activator, and wherein the phosphor particles are better protected against the influence of moisture and loss of fluorescence power.

It is more particularly an object of the present invention to provide better moisture-resistant radiation conversion screens incorporating said phosphor particles.

It is another object of the present invention to provide a process for preparing such screens having an improved stability with respect to their fluorescent light-emitting power.

In accordance with the present invention a composition of matter is provided, which composition includes in a binding agent halide-containing phosphor particles which are admixed with, combined in contact with or have reacted with at least one organic compound in such a way that the fluorescing power of the phosphor particles is less susceptible to the deleterious influence of humidity and wherein said organic compound is an organic compound containing no metal atoms and corresponding to one of the following general formulae:

$$R—X \text{ and } X—R^1—X$$

wherein:

R represents a monovalent organic group, preferably of at least 6 carbon atoms e.g. a hydrocarbon group,

$R^1$ represents a bivalent organic group, preferably of at least 6 carbon atoms e.g. a bivalent hydrocarbon group, with the proviso that these R and $R^1$ groups contain no reactive hydrogen such as contained in X, and

X represents a group containing reactive hydrogen, with which said compound by reacting with acetyl chloride is capable of splitting off chlorine therefrom in the form of hydrogen chloride in the circumstances of the test A below, e.g. mercapto, a primary or secondary amino group, carboxyl or hydroxyl, and wherein said compound at 15°C has a solubility of no more than 5 g in 100 ml of water.

In the formula $X—R^1—X$ the groups X may be the same or different chemical groups.

Test A

Stoichiometric amounts of acetyl chloride and of the organic compound to be examined are dissolved in anhydrous benzene and refluxed herein for 24 h in the presence of a stoichiometric amount of pyridine. The pyridinium chloride formed is separated from the cooled reaction mixture (20°C) by filtering or centrifuging. If pyridinium chloride crystals happen to be contained in the cooled reaction mixture, the compound meets the demand, viz. to be usable as a stabilising agent in the present invention.

If the organic compound to be examined is a primary or secondary amine, pyridine may be omitted from the reaction mixture and the chlorides corresponding with these amines form in the reaction.

Pyridine is normally used as hydrogen chloride scavenger in alcoholysis [see John H. Billman and Elisabeth S. Cleland in Methods of Synthesis in Organic Chemistry—Edward Brothers, Inc. Ann Arbor, Mich., U.S.A. (1951) 78]. The use of pyridine as condensing agent in the preparation of acid anhydrides starting from a carboxylic acid chloride and a carboxylic acid has been described by Wagner and Zook, Synthetic Organic Chemistry—John Wiley and Sons (1953) 558.

Suitable organic compounds containing no metal atoms are organic compounds according to the above general formulae wherein X is a mercapto group, a primary or secondary amino group, a carboxyl group or a hydroxyl group, which is linked to an aliphatic group or aromatic nucleus.

The invention includes compositions of matter as hereinbefore defined wherein (an) organic compound(s) having said effect of stabilising the phosphor against the influence of moisture (is) are present at the surfaces of the phosphor particles. Such compound(s) is (are) applied to or deposited on the phosphor particles, or result from a reaction with such phosphor particles e.g. after it (they) has (have) been dissolved in a liquid medium and then brought in dissolved state into contact with the phosphor particles.

The invention includes compositions of matter as hereinbefore defined wherein the phosphor particles bearing one or more organic compounds affording protection against moisture are dispersed in a binder.

The invention also includes any X-ray image fluorescent screen which comprises in a layer containing a binding agent said halide-containing phosphor particles in admixture with combined in contact with or having reacted with said organic compound.

A preferred optional feature resides in the employment as agent for the purposes of reducing the adverse effects of moisture on the phosphor, of an organic compound or a combination of such compounds whose potential protective power satisfied a certain test. This test (hereinafter called the "Standard Test" has been devised for the purpose of assessing the level of effectiveness of any selected organic compounds for phosphor protection in accordance with the invention and is as follows:

Standard test

(1) An X-ray image intensifying screen (Screen A) is prepared from the following composition:

| | |
|---|---|
| terbium-activated lanthanum oxybromide phosphor | 100 g |
| organic substance (compound or combination of organic compounds) to be tested | 0.5 g |
| poly(vinyl-n-butyral) containing 12% by weight of non-acetalized vinyl alcohol units and having an average molecular weight of 50,000 | 12.5 g |
| ethylene glycol monomethyl ether | 48 g |

by ball-milling to reduce the particle size to 7 NS Hegman Fineness measured with a Hegman

gage as specified in ASTM 1210, filtering the resulting dispersion, de-aerating it and applying the composition to a baryta-coated paper of 290 g per m2 at a coverage of 500 g/m2 (ASTM stands for American Society for Testing and Materials).

(2) A second X-ray image intensifying screen (screen B) is prepared in the same way as screen A except that the organic substance to be tested is omitted.

(3) Screen A is treated with moisture by applying onto the phosphor layer of the screen a wet circular piece of filter paper having a dry weight of 1.355 g, a diameter of 15 cm and a water content of 3.1 g, air-tightly enclosing the screen A together with the applied filter paper in a polyethylene bag, keeping the bag for 64 h at 60°C in a ventilated cabinet and then removing the screen from the bag, removing the filter paper and drying the screen in air for 30 min at 80°C.

(4) The screens A and B (the former having been moisture-treated as above described) are subjected to an X-ray exposure while the phosphor layers are in contact with distinct areas of the same silver halide emulsion layer of a photographic material having a transparent emulsion layer support and the exposed photographic material is developed, the X-ray exposure and development being such that in the area of the emulsion layer which was in contact with screen B a spectral density of at least 1.00 above inherent fog is obtained; and the composition of the silver halide material and the development being such that gradually increasing exposures of the silver halide emulsion area in contact with screen B would give a silver image density versus log exposure curve having a gamma value (maximum gradient of the characteristic curve) of 3;

(5) the densities $D_A$ and $D_B$ obtained in the areas of the emulsion layer, which were exposed in contact with screens A and B are measured;

(6) the actual loss of fluorescent light-emitting power of the moisture-treated screen A is computed on the basis of the spectral densities $D_A$ and $D_B$ measured in step 5 above and the gamma value 3.

An organic compound or combination of organic compounds is regarded as satisfying the above Standard Test if the result of the determination in step 6 is that the fluorescent light-emitting power of screen A incorporating that compound or combination of compounds is at least 25% of that of the non-moisture treated screen B. In the most preferred embodiment of the invention the organic compound(s) affording the moisture protection is (are) such that when such compound(s) is (are) used in screen A in the Standard Test the fluorescent light-emitting power of screen A is at least 65% and most preferably at least 75% of that of the non-moisture treated screen B.

If screen B in the Standard Test were to be moisture-treated like screen A before being subjected to the exposure and development moisture treated screen B would show a fluorescent power of less than 10% relative to that of the non-moisture treated screen B.

As already indicated a mixture or combination of organic stabilizing compounds can be employed in any one screen composition.

Preferably use is made of at least one organic compound, which is colourless and upon reaction with the phosphor yields a colourless hydrophobic reaction product at the surface of the phosphor particles.

A first class of suitable organic compounds for use according to this invention comprises organic compounds wherein reactive hydrogen is directly bound to sulphur, e.g. in thiols. Preferably thiols are used that contain a hydrocarbon group of at least 6 carbon atoms. Such thiols including aliphatic as well as aromatic representatives have been described by Arthur I. Vogel, Textbook of Practical Organic Chemistry, Longmans 3rd ed. (1959) p. 502. Very good results are obtained with 1 - n - dodecane - thiol (laurylmercaptan).

A second class of organic compounds for use according to this invention are organic compounds that contain the reactive hydrogen in an amino group, i.e. primary or secondary amines. Preferably aliphatic primary or secondary amines are used that contain a hydrocarbon group of at least 8 carbon atoms. Especially good results are obtained with 1 - n - dodecylamine (laurylamine).

A third class of organic compounds for use according to this invention are organic compounds that contain the reactive hydrogen in a carboxyl group. Preferably aliphatic carboxylic acids are used that contain a hydrocarbon group of at least 6 carbon atoms. Very good results are obtained with dodecanoic acid (lauric acid), but aliphatic carboxylic acids containing more than one carboxyl group are considered too, e.g. hexadecylenesuccinic acid and octadecylsuccinic acid.

A fourth class of organic compounds for use according to this invention are organic compounds that contain the reactive hydrogen in a hydroxyl group, which is preferably linked to a hydrocarbon group of at least 6 carbon atoms, such as e.g. in lauryl alcohol, p - t - amylphenol and isohexadecyl alcohol.

The hydrocarbon groups as referred to hereinbefore may comprise substituents that do not enhance the water-solubility of the organic compounds beyond the already given value. Suitable substituents rendering the compounds more hydrophobic are halogen atoms, e.g. fluorine, chlorine and bromine, such as e.g. in p-bromophenol and perfluorocaprylic acid.

The above mentioned organic compounds can be used in combination with metal-organic compounds that are described as stabilisers for halide-containing phosphor particles in the DE—OS 2,710,497.

To be mentioned in that respect are, e.g. organotin compounds and organobismuth compounds. Many of them are known as hydrogen chloride or hydrogen bromide scavenger or are known for the slowdown of thermal degradation of poly(vinyl chloride). Examples of such compounds are triphenylantimony, triphenylbismuth and tetraphenyltin.

A preferred class of stabilizing organometal compounds for use in combination with the organic compounds according to the present invention corresponds to the following formula:

$$R_mSnX_{4-m}$$

wherein:

R is a hydrocarbon group, e.g. an alkyl group,

X is one to three electronegative substituents e.g. oxygen in a substituent such as in an alkoxy or in a carboxylate group, or is an electronegative sulphur substituent or a water-repelling sulphur-containing substituent linked through sulphur to the tin atom e.g. a thioether, a mercaptide or xanthate group, and

m is 1, 2, or 3, excluding X being three, two or one halogen atom(s) when m is 1, 2 or 3 respectively.

Examples of such compounds are dibutyltin bis(oxooctylthioglycolate), also called dibutyltin S,S' - bis(n - octylmercapto acetate) and

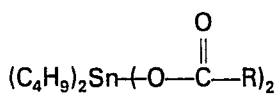

R being

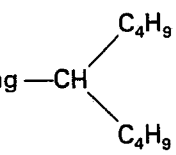

described as stabilizing agent for polyvinyl chloride by D. H. Solomon, The Chemistry of Organic Film Formers, John Wiley & Sons, Inc. New York, p. 175 to 177 (1967), and dibutyltin maleate, dibutyltin lauryl mercaptide, and di(n - octyl) - tin S,S' - bis(iso - octylmercapto acetate) described by Kirk-Othmer, Encyclopaedia of Chemical Technology, 2nd compl. revised edition, Vol. 21, p. 390 (1965) and in J. Polymer Sci. Part A, Vol. 2 (1964) 1801—1813.

A composition of matter of the present invention comprises halide-containing phosphor particles, being rare earth metal compounds in which the host metal of the phosphor is a rare earth metal and the activator consists of one or more rare earth metals, by admixture combined with (a) said organic stabilizing compound(s) optionally in a binder medium.

In one process for preparing a composition of matter according to the present invention the halide-containing phosphor particles are allowed to come in intimate contact with the organic stabilizing compound(s) in an organic liquid medium wherein said compound(s) dissolve and thus treated particles are separated out and dried.

In one process for preparing a radiation conversion screen according to the present invention the halide-containing phosphor particles are dispersed in an organic liquid medium in the presence of (a) dissolved binding agent(s) and at least one dissolved organic stabilizing compound. According to one embodiment the dispersing proceeds in a ball-mill.

Preferably the organic stabilizing compound(s) is (are) combined by admixture with the halide-containing phosphor particles in a selected phosphor binder layer combination in an amount sufficient to maintain the fluorescent light-emitting power of the layer in a moisture treatment as defined above for screen (A) at a level of at least 25% and preferably at a level of at least 75% of the level before said treatment.

The amount of organic stabilizing compound or mixture of stabilizing compounds suitable for a practically useful increase in stability against moisture of said phosphor particles can be determined by simple tests.

Effective amounts of organic stabilizers, e.g. with regard to lanthanum oxybromide phosphors containing one other rare earth metal as activator, are in the range of 0.05 to 10 g per 100 g of phosphor.

In the production of a radiation conversion screen according to the present invention the dispersion may be coated and dried on a permanent support, e.g. a cardboard or resin sheet, or coated on a temporary support to form a self-supporting sheet later on. The solvent(s) used in the preparation of the coating composition is (are) normally evaporated under reduced pressure. An ultrasonic treatment can be applied to improve the packing density and to perform the de-aeration of the phosphor-binder combination. Before the optional application of a protective coating the phosphor-binder layer may be calendered to improve the packing density (i.e. the number of grams of phosphor per cm3 of dry coating).

Self-supporting screens of this invention can also be prepared by means of "hot-pressing", excluding the use of solvent(s) in the manufacture of the screens.

To provide high X-ray efficiency it is preferable that a minimum amount of binder be employed in the fluorescent layer. However, the less binding agent the more brittle the layer, so that a compromise has to be made. The thicker the fluorescent layer of a screen, the higher its intensification, but the image sharpness is decreased accordingly so that a balance between speed and definition has to be sought. Suitable binders for use in the preparation of the fluorescent layers are, e.g., a cellulose acetate butyrate, polyalkyl (meth)acrylates, e.g. polymethyl methacrylate, a polyvinyl - n - butyral, a copoly(vinyl acetate/vinyl chloride) and a

copoly(acrylonitrile/butadiene/styrene) or a copoly(vinyl chloride/vinyl acetate/vinyl alcohol) or mixtures thereof. The preferred binders are halogen-free polymers or copolymers.

Optionally, a light-reflecting layer is provided between the fluorescent layer and its support to enhance the exposure of the silver halide emulsion material.

To the phosphor-containing layer a protective coating may be applied preferably having a thickness in the range of 5 to 25 $\mu$m and being composed of any film-forming polymeric material that is photographically inert towards a silver halide emulsion layer.

Polymeric materials suitable for that purpose include, e.g., cellulose derivatives e.g. cellulose nitrate, cellulose triacetate, cellulose acetate propionate, cellulose acetate butyrate, polyamides, polystyrene, polyvinyl acetate, polyvinyl chloride, silicone resins, poly(acrylic ester) and poly(methacrylic ester) resins, fluorinated hydrocarbon resins, and mixtures of the foregoing materials. Representative examples of various individual members of these binder materials include the following resinous materials: poly(methyl methacrylate), poly(n-butyl methacrylate), poly(isobutyl methacrylate), copolymers of n-butyl methacrylate and isobutyl methacrylate, copolymers of vinylidene fluoride and hexafluoropropylene, copolymers of vinylidene fluoride and trifluorochloroethylene, copolymers of vinylidene fluoride and tetrafluoroethylene, terpolymers of vinylidene fluoride, hexafluoropropylene and tetrafluoroethylene, and poly(vinylidene fluoride).

According to a special embodiment the outer face of the screen intended for contact with the photographic silver halide emulsion material contains a solid particulate material that has a static friction coefficient ($\mu$) at room temperature (20°C) of less than 0.50 on steel.

Antistatic substances may be applied to the screen to reduce the risk of electrical potential differences resulting in sparking. For example, the screens are treated with the "ANTI-STAT" 6 spray, which leaves an odourless transparent antistatic deposit. ANTI-STAT is a trade name of Braun Laboratories Div. Barrett Chemical Co. Inc., Philadelphia, Pa., U.S.A.

The halide-containing phosphor particles in the present composition of matter are halide-containing rare-earth metal compounds, in which the host metal of the phosphor is a rare-earth metal and the activator consists of one or more other rare-earth metals. For example, these phosphors contain yttrium, gadolinium, lanthanum, or cerium as a host metal and at least one of the metals of the group of terbium, europium, dysprosium, thulium, samarium and ytterbium as activator metal.

Preferred phosphors of this class correspond to one of the following general formulae:

$$La_{(1-n)}Tb_n^{3+}OX$$

wherein X is halogen such as chlorine, bromine, or fluorine, and n is from 0.006 to 0.0001, the halogen being present preferably in the range of between the stoichiometric amount and 2.5 percent differing therefrom; or

$$La_{(1-w-y)}OX{:}Tb_wYb_y$$

wherein X is chlorine or bromine

w is 0.0005 to 0.006 mole of the oxyhalide, and

y is 0.00005 to 0.005 per mole of the oxyhalide.

Cerium may replace lanthanum in an amount described in the U.K. Patent Specification 1,247,602 filed October 9, 1969 by General Electric and Co.

The preparation of terbium-activated lanthanum oxychloride and lanthanum oxybromide phosphors emitting visible light is described, e.g., in U.K. Patent Specification 1,247,602 mentioned hereinbefore, the French Patent Specifications 2,021,398 and 2,021,399 both filed October 23, 1969 by General Electric and Co, and the published German Patent Applications (DE—OS) 1,952,812 filed October 21, 1969 and 2,161,958 filed December 14, 1971 both by General Electric and Co. Suitable lanthanum oxychloridefluoride phosphors activated with terbium optionally together with cerium are described in the published German Patent Application (DE—OS) 2,329,396 filed June 8, 1973 by Siemens A.G.

The preparation of lanthanum oxyhalides activated with terbium and ytterbium is described, e.g., in the published German Patent Application (DOS) 2,161,958 mentioned hereinbefore.

Oxyhalides of lanthanum and gadolinium activated with thulium are described, e.g., for use in radiographic intensifier screens in the United States Patent Specification 3,795,814 of Jacob G. Rabatin, issued March 5, 1974.

The thickness of the supported fluorescent layer may vary within a broad range but is preferably in the range of 0.05 to 0.5 mm.

The coverage of the phosphors is, e.g., in the range of 200 to 800 g/sq.m and preferably approximately 300 to 600 g/sq.m.

The image sharpness obtainable with a fluorescent screen-silver halide material system can be improved considerably by incorporating a fluorescent light-absorbing dye, called "screening dye" herein, into the fluorescent screen material, e.g. into the fluorescent layer or into a layer adjacent thereto e.g. into a subjacent anti-reflection layer. As the oblique radiation has a longer path in the screen material, it is attenuated by the screening dye or dyes to a greater extent than the radiation impinging normally. The term "screening dye" used herein includes dyestuffs (i.e. coloured substances in molecularly divided form) as well as pigments.

Diffuse radiation reflecting from the support

of the fluorescent screen material can be mainly attenuated in an anti-reflection layer containing the screening dyes subjacent to the fluorescent layer.

The screening dye need not to be removed from the fluorescent screen material and may therefore be any dye or pigment absorbing in the emission spectrum of the fluorescent substance(s). Thus black substances such as carbon black particles of an average size of 0.15 to 0.60 $\mu$m incorporated in said anti-reflection layer or the phosphor layer yield quite satisfactory results.

The screening dye(s) is (are) preferably used in the fluorescent layer e.g. in an amount of at least 0.5 mg per sq.m. When used in the anti-reflection layer, however, the amount of said dye(s) is not limited.

A suitable screening dye for use in the fluorescent screens emitting in the green range (500 to 600 nm) of the visible spectrum is, e.g., Neozapon Fire Red (C.I. Solvent Red 119), an azochromium rhodamine complex. Other suitable screening dyes are C.I. Solvent Red 8, 25, 30, 31, 32, 35, 71, 98, 99, 100, 102, 109, 110, 118, 124 and 130.

The non-self-supporting phosphor-binder composition may be coated on a wide variety of supports, e.g. cardboard and plastic film, e.g. polyethylene terephthalate film. A support used in a fluorescent screen of the present invention may be coated with (a) subbing layer(s) to improve the adherence of the fluorescent coating thereto.

Screens according to the present invention may be used in conjunction with light-sensitive silver halide materials emulsion-coated on one or both sides of the support.

The following examples illustrate the present invention.

Example 1

Preparation of screen A

A mixture consisting of 100 g of terbium-activated lanthanum oxybromide phosphor, 0.5 g of lauric acid as stabilizing compound, 12.5 g of poly(vinyl-n-butyral) still containing 12% by weight of nonacetalized vinyl alcohol units and having an average molecular weight of 50,000, and 48 g of ethylene glycol monomethyl ether were ball-milled to a fineness of grind corresponding with 7 NS Hegman fineness of grind measured with the Hegman gauge as specified in ASTM D1210. The dispersion obtained was filtered and after de-aeration coated onto a baryta-coated paper of 290 g per sq.m at a coverage of 500 g per sq.m to form said screen A.

Preparation of screen B

The X-ray image intensifying screen (B) was manufactured as described for screen (A) with the difference that the stabilizing compound was omitted from the composition of the screen.

Moisture treatment

The moisture treatment of screens (A) and (B) proceeded by covering congruently the phosphor coating of each of the screens (A) and (B) with a wet circular piece of filter paper having a weight of 1.355 g in dry state, a diameter of 15 cm, and a water content of 3.100 g. Subsequently, the covered screens (A) and (B) were separately packed air-tight in a polyethylene bag and kept at 60°C for 64 h in a ventilated cabinet. The screens (A) and (B) were removed then from the bag and after removal of the filter paper dried in the air for 30 min at 80°C.

X-ray exposure and development

The thus moisture-treated screens (A) and (B) and a screen ($B^1$) which was like screen B but was untreated with moisture, were exposed to X-rays in contact with CURIX RP1 film (Curix is a trade mark of the Applicant for a medical X-ray film). The exposure was effected to such a degree that after development for 23 s at 35°C in Agfa-Gevaert's hardening developer G 138 containing hydroquinone and 1 - phenyl - 3 - pyrazolidinone as developing agents and glutaraldehyde as a hardener the area of the silver halide material exposed in contact with the untreated screen ($B^1$) showed a transmission spectral density of 1.82 above fog. After gradually increasing exposures with screen ($B^1$) of the above film material and said development of the film as described a silver image with a gamma ($\gamma$) of 3 is obtained.

The transmission spectral densities obtained with the moisture-treated screens (A) and (B) were 1.76 and zero above fog respectively.

The actual loss in fluorescence power of screen (A) was computed as follows:

$$\Delta \text{ density } (\Delta D) = 1.82 - 1.76 = 0.06$$

$$\Delta \log \text{ exposure } (\Delta \log E) = \frac{\Delta D}{\gamma} = \frac{0.06}{3} = 0.02$$

antilog 0.02=1.05; 1/1.05=0.95
100%–90%=5%.

A usable result was also obtained by replacing lauric acid by a same amount of 1 - n - dodecylamine.

Example 2

Preparation of screen I

— 5 g of a 40% by weight solution in toluene of ELVACITE 2044 (ELVACITE 2044 is a registered trade mark of E.I. du Pont de Nemours & Co. (Inc.), Wilmington, Del., U.S.A., for a poly - n - butyl methacrylate)
— 100 g of LaOBr: 0.02 Tb: 0.0005 Yb phosphor particles prepared according to published German Patent Specification 2,161,958,

— 0.5 g of the stabilizing compound: laurylmercaptan, and
— 251.2 g of toluene were ball-milled for 4 h, whereupon a further amount of 10.5 g of ELVACITE 2044 (trade mark) was added and ball-milling was continued up to a Hegman fineness of grind of 7 NS (average phosphor particle size 7 $\mu m$) measured with the Hegman gauge as specified in ASTM D1210.

The dispersion obtained was coated at a coverage of 500 g per sq.m of phosphor on a subbed polyethylene terephthalate support and dried.

Preparation of screen II

Screen II was prepared in the same way as described for screen I with the difference, however, that the stabilizing compound was omitted from the composition.

Moisture treatment

Circular pieces of screen I and screen II each of them having a diameter of 15 cm were separately covered congruently with a wet circular piece of filter paper having a weight of 1.355 g in dry state, a diameter of 15 cm, and a water content of 3.100 g. Each of the thus covered screens was packed air-tight separately in a polyethylene bag and kept at 60°C in a ventilated cabinet for 64 h. Subsequently, the covered screens were removed from the polyethylene bag and the pieces of screens I and II after separation from the filter paper were dried in the air for 30 min at 80°C.

X-ray exposure and development

The moisture-treated screens I and II and an untreated screen II' were exposed to X-rays in contact with a CURIX (trade mark) RP1 film. The exposure was effected to such a degree that after development for 23 s at 35°C in Agfa-Gevaert's hardening developer G 138 containing hydroquinone and 1 - phenyl - 3 - pyrazolidinone as developing agents and glutaraldehyde as a hardener the area of the silver halide material exposed in contact with the untreated screen II' showed a transmission spectral density of 1.25 above fog.

Computed from the difference in density obtained with the moisture-treated screen I and non-moisture-treated screen II' the actual loss in fluorescence power of screen I was 7.9 %.

Example 3

Preparation of screen P

A mixture consisting of 100 g of terbium-activated lanthanum oxybromide phosphor, 0.5 g of lauryl alcohol as stabilizing compound, 12.5 g of poly(vinyl - n - butyral) still containing 12% by weight of non-acetalized vinyl alcohol units and having an average molecular weight of 50,000 and 48 g of ethylene glycol monomethyl ether were ball-milled to 7 NS Hegman fineness of grind measured with the Hegman gauge as specified in ASTM D1210. The dispersion obtained was filtered and after de-aeration coated onto a baryta-coated paper of 290 g per sq.m at a coverage of 150 g of phosphor per sq.m to form screen P.

The phosphor layer was overcoated with a protective coating from a 7.5% solution in ethylene glycol monomethyl ether of cellulose acetate butyrate having a degree of substitution (DS) of acetyl 1.31 and a DS of butyryl of 1.51. The dried protective coating had a coating weight of 10 g per sq.m.

Preparation of screen Q

The X-ray image intensifying screen Q was manufactured as described for screen P with the difference that the stabilizing compound was omitted from the composition of the screen.

Moisture treatment

The moisture treatment of screens P and Q proceeded by incubation in a cabinet having inside an atmosphere of 85% relative humidity at 20°C. Said incubation treatment was effected for a period of 2 weeks. After that period the fluorescence power of screen Q was completely lost and screen P showed randomly distributed spots and small craters.

By "intensification factor" is to be understood a factor measured at a pre-elected density D, indicating the exposure required to produce this density when the film is exposed to X-rays without intensifying screen, divided by the exposure required to produce the same density, e.g. density D=1.00, when the film is exposed with the screen, the wavelength distribution of the radiation and the conditions of development being maintained constant.

**Claims**

1. A composition of matter including halide-containing phosphor particles which are admixed with, combined in contact with or have reacted with at least one organic compound such that the fluorescence power of said phosphor particles is less liable to be adversely affected by moisture, characterized in that said halide-containing phosphor particles are rare-earth metal compounds in which the host metal of the phosphor is a rare-earth metal and the activator consists of one or more other rare-earth metals, and in that said organic compound is an organic compound containing no metal atoms and corresponds to one of the following general formulae:

$$R—X \text{ and } X—R^1—X$$

wherein:

R represents a monovalent organic group,

$R^1$ represents a bivalent organic group, with the proviso that these R and $R^1$ groups contain no reactive hydrogen such as contained in X, and

X represents a group containing reactive hydrogen, said compound upon reacting with acetyl chloride being capable of splitting off chlorine in the form of hydrogen chloride in the circumstances of the test A described herein, said compound having a solubility at 15°C of no more than 5 g in 100 ml of water, said test A proceeding by dissolving stoichiometric amounts of acetyl chloride and of the organic compound to be examined in anhydrous benzene and refluxing herein for 24 h in the presence of a stoichiometric amount of pyridine, and separating from the cooled reaction mixture (20°C) by filtering or centrifuging the optionally formed pyridinium chloride crystals which, when contained in the cooled reaction mixture, indicate that the organic compound is usable for stabilizing the fluorescence power of said phosphor particles under conditions of moisture; if the organic compound to be examined is a primary or secondary amine, omitting pyridine from the reaction mixture to form the chlorides of these amines.

2. A composition according to claim 1, wherein the phosphor particles bearing one or more of said organic substances affording protection against moisture are dispersed in a binder.

3. A composition of matter according to any of claims 1 and 2, wherein said compound when used in the circumstances of the following test is capable of maintaining the fluorescent light-emitting power of the test-phosphor to a level of at least 25% of its original fluorescent light-emitting power, said test comprising the following steps:

(1) the production of X-ray image intensifying screens (A) and (B),

(2) a moisture treatment of screen (A)

(3) an X-ray exposure of said screens (A) and (B) in contact with distinct areas of a photographic silver halide emulsion material and the development of said material,

(4) the measurement of the spectral densities obtained in the areas of said material that have been exposed in contact with said screens (A) and (B), and

(5) the computation of the actual loss of fluorescent light-emitting power of the moisture-treated screen (A) in comparison with screen (B) from the spectral density results obtained in step (4),

— the production of the X-ray image intensifying screen (A) proceeding as follows:

100 g of terbium-activated lanthanum oxybromide phosphor,

0.5 g of the compound to be tested,

12.5 g of poly(vinyl - n - butyral) containing 12% by weight of non-acetalized vinyl alcohol units and having an average molecular weight of 50,000 and 48 g of ethylene glycol monomethyl ether are ball-milled to a fineness of grind corresponding with 7 NS Hegman measured with the Hegman gauge as specified in American Society for Testing and Materials ASTM D1210, whereupon the dispersion obtained is filtered and after deaeration coated onto a baryta-coated paper of 290 g per sq.m at a coverage of 500 g per sq.m to form said X-ray image intensifying screen A,

— the production of the X-ray image intensifying screen (B) proceeding as described for screen (A) with the difference that the substance to be tested is left out of the composition of the screen,

— the moisture treatment of screen (A) proceeding by covering congruently the phosphor coating of screen (A) with a wet circular piece of filter paper having a weight of 1.355 g in dry state, a diameter of 15 cm and a water-content of 3.100 g, thereupon airtight packing the thus covered screen (A) in a polyethylene bag and keeping the thus packed covered screen (A) at 60°C for 64 h in a ventilated cabinet followed by the removing of said screen (A) from the bag and after removal of the filter paper drying at the air at 80°C for 30 min,

— X-ray exposure of the thus treated screen (A) and untreated screen (B) proceeding while having said screens with the phosphor coating in contact with the silver halide emulsion layer side of a same photographic silver halide emulsion material with transparent base, the X-ray exposure and the subsequent development of the silver halide material being such that with screen (B) a spectral density of at least 1.00 above inherent fog is obtained in the silver halide material area contacting screen (B); the silver halide material and development are such that after gradually increasing exposures with screen (B) a silver image is obtained whose density versus log exposure curve has a gamma value of 3;

— the measurement of the transmission spectral densities $D_A$ and $D_B$ proceeding in the areas of the developed silver halide emulsion material that during the exposure have been in contact with screens (A) and (B) respectively;

— the computing of the actual loss of fluorescent light-emitting power of the moisture treated screen (A) in comparison with screen (B) proceeding on the basis of the spectral density results $D_A$ and $D_B$ and the gamma 3.

4. A composition of matter according to any of claims 1 to 3, wherein said composition has the form of an X-ray image fluorescent screen, which comprises in a layer containing a binding agent, said halide-containing phosphor particles in admixture with, combined in contact with or have reacted with said organic compound.

5. A composition of matter according to any of claims 1 to 4, wherein said organic compound is an organic compound wherein the reactive hydrogen atom is linked directly to a

sulphur atom, or which compound contains the reactive hydrogen atom in an amino group, a carboxyl group or a hydroxyl group.

6. A composition according to claim 5 wherein said organic compound is a thiol that contains a hydrocarbon group of at least 6 carbon atoms, an aliphatic primary or secondary amine that contains a hydrocarbon group of at least 8 carbon atoms, an aliphatic carboxylic acid that contains a hydrocarbon group of at least 6 carbon atoms, or a compound containing a hydroxyl group linked to a hydrocarbon group of at least 6 carbon atoms.

7. A composition according to any of claims 1 to 6, wherein the host metal of the phosphor is yttrium, gadolinium, lanthanum or cerium and the activator metal of the phosphor is at least one of the metals of the group of terbium, europium, dysprosium, thulium, samarium and ytterbium.

8. A composition according to claim 7, wherein the rare-earth metal compound corresponds to one of the following formulae:

$$La_{(1-n)}Tb_n^{3+}OX$$

wherein X is halogen such as chlorine, bromine, or fluorine, and n is from 0.006 to 0.0001, or

$$La_{(1-w-y)}OX: Tb_wYb_y$$

wherein

X is chlorine or bromine

w is 0.0005 to 0.006 mole of the oxyhalide, and

y is 0.00005 to 0.005 per mole of the oxyhalide.

9. A composition according to any of claims 1 to 8, wherein said rare-earth metal compound is a terbium-activated lanthanum oxybromide phosphor.

10. A composition according to claim 2, wherein the binder consists of a halogen-free polymer or copolymer.

**Patentansprüche**

1. Halogenidhaltige Leuchtstoffteilchen enthaltende fluoreszierende Zusammensetzung, der diese Teilchen derart zugesetzt sind nach Mischung, Kombination in Kontakt, oder Reaktion mit mindestens einer organischen Verbindung, dass ihre Leuchtkraft weniger empfindlich ist für die schädliche Einwirkung der Feuchtigkeit, dadurch gekennzeichnet, dass die halogenidhaltigen Leuchtstoffteilchen aus Verbindungen von Seltenerdmetallen bestehen, wobei das Wirtsmetall des Leuchtstoffes ein Seltenerdmetall ist und der Aktivator aus einem oder mehreren anderen Seltenerdmetallen besteht und dass die organische Verbindung eine metallatomfreie Verbindung entsprechend einer der folgenden allgemeinen Formeln ist:

$$R—X \text{ und } X—R^1—X$$

in denen bedeuten:

R eine einwertige organische Gruppe;

$R^1$ eine zweiwertige organische Gruppe, vorausgesetzt dass, im Gegensatz zur Gruppe X, keine der beiden Gruppen R und $R^1$ reaktionsfreudiges Wasserstoff enthält; und

X eine reaktionsfreudiges Wasserstoff enthaltende Gruppe, wobei die betreffende Verbindung Chlor in der Form von Chlorwasserstoff abzuspalten vermag durch Reaktion mit Acetylchlorid in den Umständen des hier beschriebenen Versuches A und bei 15°C eine Wasserlöslichkeit von höchstens 5 g/100 ml hat, wobei dieser Versuch A stattfindet durch Lösen von Acetylchlorid und der zu prüfenden Verbindung im stöchiometrischen Verhältnis in wasserfreiem Benzol, 24 stündige Heizung des derart erhaltenen Gemisches unter Rückflusskühlung in der Gegenwart einer stöchiometrischen Pyridinmenge und Trennung der gegebenenfalls gebildeten Pyridiniumchloridkristalle vom gekühlten Reaktionsgemisch (20°C) durch Filtrieren oder Zentrifugieren, wobei die etwaige Gegenwart derartiger Kristalle im gekühlten Reaktionsgemisch bedeutet, dass die betreffende organische Verbindung sich für die Stabilisierung der Leuchtkraft der betreffenden Leuchtstoffteilchen gegen die schädliche Einwirkung der Feuchtigkeit eignet und wobei, falls die zu prüfende organische Verbindung ein primäres oder sekundäres Amin ist, das Pyridin zwecks Bildung der Chloride dieser Amine aus dem Reaktionsgemisch fortzulassen ist.

2. Zusammensetzung gemäss Anspruch 1, dadurch gekennzeichnet, dass die Leuchtstoffteilchen, die eine oder mehrere der vorgenannten organischen Verbindungen zum Schutz ihrer Leuchtkraft gegen den schädlichen Einfluss der Feuchtigkeit enthalten, in einem geeigneten Bindemittel dispergiert sind.

3. Zusammensetzung gemäss irgendeinem der vorhergehenden Ansprüche 1—2, dadurch gekennzeichnet, dass die organischen Verbindungen, bei Anwendung in den Umständen des unten beschriebenen Versuches, die Leuchtkraft des Versuchsleuchtstoffes bei einem Wert zu stabilisieren vermögen, der wenigstens 25 % der ursprünglichen Leuchtkraft beträgt, wobei dieser Versuch die folgenden Stufen umfasst:

1) Herstellung von zwei Röntgenverstärkerfolien A und B;

2) Feuchtebehandlung der Folie A;

3) Röntgenbelichtung der beiden Folien A und B in Berührung mit unterschiedlichen Bereichen eines photographischen Silberhalogenidemulsionsmaterials und Entwicklung desselben;

4) Messung der Spektralschwärzungen der in Berührung mit den Folien A und B belichteten Teile des photographischen Materials; und

5) Vergleich des Leuchtkraftverlustes der dem Einfluss der Feuchtigkeit ausgesetzten Folie A mit dem der Folie B auf Grund der in der

vorhergehenden Stufe (4) ermittelten Schwärzungswerte, wobei

— die Herstellung der Röntgenverstärkerfolie A folgendermassen stattfindet:
Mischung von 100 g Leuchtstoff in der Form von mit Terbium aktiviertem Lanthanoxybromid,
0,5 g der zu prüfenden Verbindung,
12,5 g noch 12 Gewichtsprozente nicht-acetalisierter Vinylalkoholeinheiten enthaltendes Poly(vinyl - n - butyral) mit einem Molekulargewicht von 50 000, und 49 g Äthylenglykolmonomethyläther in einer Kugelmühle bis eine Feinheit von 7 NS Hegman, gemessen mit dem Hegman-Gerät gemäss ASTM D1210; Filtration der derart erhaltenen Dispersion, und schliesslich Beschichtung einer barytierten Papierunterlage von 290 g/m2 mit der entlüfteten Dispersion im Verhältnis von 500 g/m2 zwecks Erhaltung der Röntgenverstärkerfolie A;
— die Herstellung der Röntgenverstärkerfolie B, die auf ähnliche Wiese wie die der Folie A, aber mit Fortlassung der zu prüfenden Verbindung aus dem Gemisch, stattfindet;
— die Feuchtebehandlung der Folie A durch gleichmässige Bedeckung ihrer Leuchtstoffschicht mit einem feuchten kreisförmigen Stück Filtrierpapier mit einem Trockengewicht von 1,355 g, einem Durchmesser von 15 cm und einem Wassergehalt von 3,1 g stattfindet; luftdichte Verpackung der derart bedeckten Folie A in einem Polyäthylenbeutel; Wärmebehandlung der derart verpackten Folie A bei 60°C während 64 h in einem ventilierten Schrank; Entfernung der Folie A aus dem Beutel; Entfernung des Filtrierpapiers von der Folie und schliesslich Trocknung derselben in heisser Luft (80°C) während 30 min;
— die Röntgenbelichtung der derart behandelten Folie A und der unbehandelten Folie B in Berührung mit der Silberhalogenidemulsionsschicht eines selben photographischen, aus einer Silberhalogenidemulsionsschicht auf transparenter Unterlage bestehenden photographischen Material stattfindet, wobei die Röntgenbelichtung und die darauf folgende Entwicklung des Silberhalogenidmaterials derart geregelt werden, dass mit der Folie B eine Schwärzung von wenigstens 1,00 oberhalb des Emulsionsschleiers im in Berührung mit dieser Folie belichteten Silberhalogenidmaterial erreicht wird und das Silberhalogenidmaterial und die Entwicklungsweise derart gewählt werden, dass nach allmählicher Erhöhung der Belichtung des Materials in Berührung mit der Folie B eine Schwärzungskurve mit einem Gammawert von 3 erhalten wird;
— die Durchsichtschwärzungen $D_A$ und $D_B$ in den in Berührung mit den Folien A bzw. B belichteten Teilen des photographischen Materials gemessen werden;
— der Leuchtkraftverlust der feuchtebehandelten Folie A im Vergleich mit der Folie B auf Grund der Differenz zwischen den bei einem Gammawert von 3 gemessenen Schwärzungen $D_A$ und $D_B$ berechnet wird.

4. Zusammensetzung gemäss irgendeinem der vorhergehenden Ansprüche 1—3, dadurch gekennzeichnet, dass es sich um eine fluoreszierende Röntgenverstärkerfolie handelt, die eine Schicht enthält, in der die vorgenannten mit der erfindungsgemässen organischen Verbindung vermischten, kombinierten oder durch chemische Reaktion verbundenen halogenidhaltigen Leuchtstoffteilchen in einem Bindemittel dispergiert sind.

5. Zusammensetzung gemäss irgendeinem der vorhergehenden Ansprüche 1—4, dadurch gekennzeichnet, dass die organische Verbindung eine organische Verbindung ist, worin das reaktionsfreudige Wasserstoffatom unmittelbar an einem Schwefelatom gebunden ist oder zu einer Amino-, Carboxyl- oder Hydroxylgruppe gehört.

6. Zusammensetzung gemäss Anspruch 5, dadurch gekennzeichnet, dass die organische Verbindung ein eine Kohlenwasserstoffgruppe mit weinigstens 6 C-Atomen enthaltendes Thiol, ein aliphatisches primäres oder sekundäres Amin mit einer Kohlenwasserstoffgruppe von wenigstens 8 C-Atomen, eine eine Kohlenwasserstoffgruppe von wenigstens 6 C-Atomen enthaltende aliphatische Carbonsäure oder eine eine an einer Kohlenwasserstoffgruppe mit wenigstens 6 C-Atomen gebundene Hydroxylgruppe enthaltende Verbindung ist.

7. Zusammensetzung gemäss irgendeinem der vorhergehenden Ansprüche 1—6, dadurch gekennzeichnet, dass das Wirtsmetall des Leuchtstoffes Yttrium, Gadolinium, Lanthan oder Cer und das Aktivatormetall desselben wenigstens ein Metall der aus Terbium, Europium, Dysprosium, Thulium, Samarium und Ytterbium bestehenden Gruppe ist.

8. Zusammensetzung gemäss Anspruch 7, dadurch gekennzeichnet, dass die Verbindung des Seltenerdmetalles einer der beiden folgenden Formeln entspricht:

$$La_{(1-n)}Tb_n^{3+}OX$$

in der bedeuten:
X ein Halogenatom, wie ein Chlor-, Brom- oder Fluoratom, und
n 0,006—0,0001,
oder

$$La_{(1-w-y)}OX:Tb_wYb_y$$

in der bedeuten:
X ein Chlor- oder Bromatom,
w 0,005—0,006 Mol des Oxyhalogenids, und
y 0,0005—0,005 Mol des Oxyhalogenids.

9. Zusammensetzung gemäss irgendeinem der vorhergehenden Ansprüche 1—8, dadurch gekennzeichnet, dass die Verbindung des Seltenerdmetalles ein mit Terbium aktivierter lanthanoxybromidhaltiger Leuchtstoff ist.

10. Zusammensetzung gemäss irgendeinem der vorhergehenden Ansprüche 2—9, dadurch gekennzeichnet, dass das Bindemittel aus einem halogenfreien Polymeren oder Copolymeren besteht.

**Revendications**

1. Composition de matière comprenant des particules de substances luminescentes contenant un halogénure, qui sont mélangées avec, combinées, en contact avec, ou ont réagi avec au moins un composé organique de telle sorte que le pouvoir fluorescent de ces particules soit moins susceptible de subir l'influence néfaste de l'humidité, caractérisée en ce que ces particules de substances luminescentes contenant un halogénure sont des composés de métaux de terres rares dans lesquels le métal hôte de la substance luminescente est un métal de terres rares et l'activateur est constitué d'un ou de plusieurs autres métaux de terres rares, tandis que le composé organique est un composé organique ne contenant aucun atome de métal et répondant à une des formules générales suivantes:

$$R—X \text{ et } X—R^1—X$$

où:

R représente un groupe organique monovalent,

$R^1$ représente un groupe organique bivalent, à condition que ces groupes R et $R^1$ ne contiennent pas d'atome d'hydrogène réactif tel que celui contenu dans X, et

X représente un groupe contenant un atome d'hydrogène réactif, ce composé étant capable, lors de la réaction avec le chlorure d'acétyle, de séparer du chlore sous forme de chlorure d'hydrogène dans les conditions de l'essai A décrit ici, ce composé ayant, à 15°C, une solubilité ne dépassant pas 5 g dans 100 ml d'eau, cet essai A se déroulant en dissolvant des quantités stoechiométriques de chlorure d'acétyle et du composé organique à examiner dans du benzène anhydre en chauffant à reflux pendant 24 heures en présence d'une quantité stoechiométrique de pyridine, pour séparer ensuite, du mélange réactionnel refroidi (20°C), par filtration ou par centrifugation, les cristaux de chlorure de pyridinium éventuellement formés qui, lorsqu'ils sont contenus dans le mélange réactionnel refroidi, indiquent que le composé organique peut être utilisé en vue de stabiliser le pouvoir fluorescent de ces particules de substances luminescentes dans des conditions humides et, si le composé organique à examiner est une amine primaire ou secondaire, on omet la pyridine du mélange réactionnel pour former les chlorures de ces amines.

2. Composition suivant la revendication 1, caractérisée en ce que les particules de substances luminescentes comportant une ou plusieurs de ces substances organiques assurant une protection contre l'humidité sont dispersées dans un agent liant.

3. Composition de matière suivant l'une quelconque des revendications 1 et 2, caractérisée en ce que, lorsqu'il est utilisé dans les conditions de l'essai ci-après, ce composé est capable de maintenir le pouvoir d'émission de lumière fluorescente de la substance luminescente d'essai à un niveau représentant au moins 25% de son pouvoir initial d'émission de lumière fluorescente, cet essai comprenant les étapes suivantes:

(1) la formation d'écrans renforçateurs d'images radiographiques (A) et (B),

(2) un traitement de l'écran (A) à l'humidité,

(3) une exposition radiographique de ces écrans (A) et (B) en contact avec des zones distinctes d'un élément photographique d'émulsion à l'halogénure d'argent et le développement de cet élément,

(4) la mesure des densités spectrales obtenues dans les zones de cet élément qui ont été exposées en contact avec les écrans (A) et (B), et

(5) le calcul de la perte réelle du pouvoir d'émission de lumière fluorescente de l'écran traité à l'humidité (A) comparativement à l'écran (B) d'après les résultats relatifs à la densité spectrale et obtenus lors de l'étape (4),

— la formation de l'écran renforçateur d'images radiographiques (A) se déroulant de la manière suivante:

on broie aux boulets:

100 g de substance luminescente d'oxybromure de lanthane activé au terbium,

0,5 g du composé à éprouver,

12,5 g de polyvinyl - n - butyral contenant 12% en poids de motifs d'alcool vinylique non acétalisé et ayant un poids moléculaire moyen de 50,000, ainsi que 48 g d'éther monométhylique d'éthylène-glycol, jusqu'à une finesse de broyage correspondant à 7 NS Hegman, mesuré à la jauge de Hegman selon les spécifications de la norme ASTM D1210, après quoi on filtre la dispersion obtenue et, après en avoir éliminé l'air, on la coule sur un papier baryté de 290 g/m2 à raison de 500 g/m2 afin de former cet écran renforçateur d'images radiographiques A,

— la formation de l'écran renforçateur d'images radiographiques (B) se déroulant comme décrit pour l'écran (A), avec cette différence que la substance à éprouver est omise dans la composition de l'écron

— le traitement de l'écran (A) à l'humidité se déroulant en recouvrant correctement le revêtement de substance luminescente de l'écran (A) d'une pièce circulaire humide de papier-filtre pesant 1,355 g à sec et ayant un diamètre de 15 cm, ainsi qu'une teneur en

eau de 3,1 g, après quoi on emballe l'écran ainsi recouvert (A), à l'abri de l'air, dans un sac en polyéthylène et on maintient l'écran ainsi recouvert et emballé (A) à 60°C pendant 64 heures dans une enceinte ventilée, puis on retire cet écran (A) du sac et, après en avoir enlevé le papierfiltre, on sèche à l'air à 80°C pendant 30 minutes,

— l'exposition radiographique de l'écran ainsi traité (A) et de l'écran non traité (B) se déroulant pendant que les écrans comportant le revêtement de substance luminescente sont en contact avec la face émulsionnée (couche d'émulsion à l'halogénure d'argent) d'un même élément photographique d'émulsion à l'halogénure d'argent comportant un support transparent, l'exposition radiographique et le développement ultérieur de l'élément à l'halogénure d'argent ayant lieu de telle sorte qu'avec l'écran (B), on obtienne une densité spectrale d'au moins 1,00 au-delà du voile inhérent dans la zone de cet élément à l'halogénure d'argent qui est en contact avec l'écran (B); l'élément à l'halogénure d'argent et le développement sont conçus de telle sorte qu'après des expositions progressivement croissantes avec l'écran (B), on obtienne une image argentique dont la courbe de densité vis-à-vis du logarithme d'exposition a une valeur gamma de 3;

— la mesure des densités spectrales de transmission $D_A$ et $D_B$ ayant lieu dans les zones de l'élément développé d'émulsion à l'halogénure d'argent qui, au cours de l'exposition, ont été en contact avec les écrans (A) et (B) respectivement;

— le calcul de la perte réelle du pouvoir d'émission de lumière fluorescente de l'écran (A) traité à l'humidité comparativement à l'écran (B) se déroulant sur la base des résultats relatifs aux densités spectrales $D_A$ et $D_B$, ainsi que de la valeur gamma 3.

4. Composition de matière suivant l'une quelconque des revendications 1 à 3, caractérisée en ce qu'elle a la forme d'un écran fluorescent pour images radiographiques comprenant, dans une couche contenant un agent liant, les particules de substances luminescentes contenant un halogénure en mélange avec, en combinaison, en contact avec, ou ayant réagi avec ce composé organique.

5. Composition de matière suivant l'une quelconque des revendications 1 à 4, caractérisée en ce que le composé organique est un composé organique dans lequel l'atome d'hydrogène réactif est relié directement à un atome de soufre, ou encore un composé contenant l'atome d'hydrogène réactif dans un groupe amino, un groupe carboxyle ou un groupe hydroxyle.

6. Composition suivant la revendication 5, caractérisée en ce que le composé organique est un thiol contenant un groupe d'hydrocarbure ayant au moins 6 atomes de carbone, un amine aliphatique primaire ou secondaire contenant un groupe d'hydrocarbure ayant au moins 8 atomes de carbone, un acide carboxylique aliphatique contenant un groupe d'hydrocarbure ayant au moins 6 atomes de carbone, ou un composé contenant un groupe hydroxyle relié à un groupe d'hydrocarbure ayant au moins 6 atomes de carbone.

7. Composition suivant l'une quelconque des revendications 1 à 6, caractérisée en ce que le métal hôte de la substance luminescente est l'yttrium, le gadolinium, le lanthane ou le cérium, tandis que le métal activateur de la substance luminescente est au moins un des métaux choisis parmi le groupe comprenant le terbium, l'europium, le dysprosium, le thulium, le samarium et l'ytterbium.

8. Composition suivant la revendication 7, caractérisée en ce que le composé d'un métal de terres rares répond à une des formules suivantes:

$$La_{(1-n)}Tb_n^{3+}OX$$

où X représente un atome d'halogène tel qu'un atome de chlore, de brome ou de fluor, et

n se situe entre 0,006 et 0,0001,

ou

$$La_{(1-w-y)}OX:Tb_wYb_y$$

où

X représente un atome de chlore ou de brome,

w représente 0,0005 à 0,006 mole de l'oxyhalogénure,

y représente 0,00005 à 0,005 par mole de l'oxyhalogénure.

9. Composition suivant l'une quelconque des revendications 1 à 8, caractérisée en ce que le composé d'un métal de terres rares est une substance luminescente d'oxybromure de lanthane activé au terbium.

10. Composition suivant l'une quelconque des revendications 2 à 9, caractérisée en ce que l'agent liant est constitué d'un polymère ou d'un copolymère exempt d'halogène.